# EUROPEAN PATENT APPLICATION

(11) **EP 4 759 758 A1**
(43) Date of publication of application: **17.06.2026**
(21) Application number: 24926701.4
(22) Date of filing: 10.09.2024
(51) Int. Cl.: B65G 47/248

(54) **FLIPPING APPARATUS, BATTERY FLIPPING METHOD, AND BATTERY MANUFACTURING DEVICE**

(30) Priority: 29.02.2024 CN 202410233224
(71) Applicant: Contemporary Amperex Technology Co., Limited, Ningde, Fujian 352100 (CN)
(72) Inventor: HUANG, Qinkun, Ningde, Fujian 352100 (CN); LIU, Zhanglong, Ningde, Fujian 352100 (CN); SU, Shuaifeng, Ningde, Fujian 352100 (CN); BIAN, Fucheng, Ningde, Fujian 352100 (CN); FAN, Xiang, Ningde, Fujian 352100 (CN)
(74) Representative: Lorenz Seidler Gossel Part. mbB
(86) International application number: PCT/CN2024/118061
(87) International publication number: WO 2025/179834

(57) **Abstract**

A flipping apparatus, a battery flipping method, and a battery manufacturing device. The flipping apparatus comprises flipping members and a rotating mechanism. There are multiple flipping members, and each flipping member is provided with a constraint space for accommodating a battery so as to constrain the pose of the battery. The rotating mechanism is connected to each flipping member and is used for driving each flipping member to rotate around a rotation axis. Each flipping member is configured to be cyclically switched between a first position and a second position under the driving of the rotating mechanism; when the flipping member is at the first position, the battery enters the constraint space in a first pose; and when the flipping member is at the second position, the battery is flipped over to a second pose from the first pose and leaves the constraint space in the second pose. The flipping apparatus, the battery flipping method, and the battery manufacturing device can effectively improve the battery flipping efficiency, thereby improving the battery manufacturing efficiency.

## Description

### CROSS-REFERENCE TO RELATED APPLICATION

The present application claims priority to Chinese Patent Application No. 202410233224.0, filed on February 29, 2024 and entitled "FLIPPING APPARATUS, METHOD FOR FLIPPING BATTERY, AND DEVICE FOR MANUFACTURING BATTERY", the content of which is incorporated herein by reference in its entirety.

### TECHNICAL FIELD

The present application relates to the technical field of batteries, and in particular, to a flipping apparatus, a method for flipping a battery, and a device for manufacturing a battery.

### BACKGROUND

Energy conservation and emission reduction are the key to sustainable development of the automobile industry. Electric vehicles have become an important part of the sustainable development of the automobile industry due to their energy-saving and environmental protection advantages.

For electric vehicles, the battery technologies are an important factor in their development. How to improve the manufacturing efficiency of batteries is an urgent technical problem to be solved in the battery technologies.

### SUMMARY

The present application provides a flipping apparatus, a method for flipping a battery, and a device for manufacturing a battery. The technical solutions according to the present application can effectively improve the battery flipping efficiency, thereby improving the manufacturing efficiency of the battery.

The present application is implemented through the following technical solutions.

According to a first aspect, some embodiments of the present application provide a flipping apparatus. The flipping apparatus includes flipping members and a rotating mechanism. A plurality of the flipping members are provided, and each of the flipping members is provided with a constraint space for accommodating a battery to constrain a posture of the battery. The rotating mechanism is connected to each of the flipping members and is configured to drive each of the flipping members to rotate around a rotation axis. Each of the flipping members is configured to be cyclically switched between a first position and a second position under the driving of the rotating mechanism, when the flipping member is at the first position, the battery enters the channel in a first posture, and when the flipping member is at the second position, the battery is flipped from the first posture to a second posture and leaves the constraint space in the second posture.

In the above solutions, the process of flipping the battery by the flipping apparatus can be decomposed into three steps: the battery entering the constraint space of the flipping member, rotating the flipping member, and the battery leaving the constraint space. Therefore, the battery is flipped by the flipping apparatus, such that the battery is switched from the first posture to the second posture, which can effectively reduce the cycle time of flipping the battery. Therefore, the battery has high flipping efficiency, thereby improving the manufacturing efficiency of the battery. Meanwhile, in the process of flipping the battery, the posture of the battery is switched as the position of the flipping member is switched, and the battery is constrained in the constraint space, so the risk of the battery slipping and being thrown off due to inertia is low, the flipping quality is high, and the manufacturing efficiency of the battery is high.

According to some embodiments of the present application, all of the flipping members are evenly spaced apart from each other around the rotation axis.

In the above solutions, by setting equal angles between every two adjacent flipping members, each actuation of the rotating mechanism causes one of the flipping members to complete a full cycle. This ensures a fast cycle rate of flipping the battery and thus improves the manufacturing efficiency of the battery.

According to some embodiments of the present application, the flipping member is configured to rotate by 90° under the driving of the rotating mechanism to be switched from the first position to the second position.

In the above solutions, the rotation angle between the first position and the second position is set to 90°, such that the flipping angle of the battery is 90°, thereby meeting a current battery processing requirement and improving the manufacturing efficiency of the battery.

According to some embodiments of the present application, four flipping members are provided, and the four flipping members are evenly spaced apart from each other around the rotation axis.

In the above solutions, four flipping members are provided, and the angle between every two adjacent flipping members is 90, such that each actuation of the rotating mechanism causes each of the flipping members to rotate by 90°. In this way, a plurality of batteries are allowed to rotate by 90°, continuously, thereby effectively reducing the cycle time of flipping the batteries and thus improving the manufacturing efficiency of the batteries.

According to some embodiments of the present application, the constraint space includes an inlet and an outlet, where the inlet is configured to allow the battery to enter the constraint space, and the outlet is configured to allow the battery to leave the constraint space.

In the above solutions, by providing the inlet and the outlet, it is defined that the battery enters and leaves the constraint space from different portions, such that the risk of interference in the entry and exit of the battery is reduced, and the cycle time of flipping the battery is reduced. Therefore, the battery can have high manufacturing efficiency.

According to some embodiments of the present application, the inlet and the outlet are opposite to each other in a first direction.

In the above solutions, the inlet and the outlet are arranged opposite to each other in the first direction, such that the battery moves unidirectionally in the first direction in the constraint space, which can reduce the difficulty of the battery entering and leaving the channel. For example, by means of pushing, the battery can quickly enter and leave the channel, and meanwhile, the risk of interference in the entry and exit of the battery can also be reduced, such that the cycle time of flipping the battery is reduced, and the manufacturing efficiency of the battery is further improved.

According to some embodiments of the present application, the rotation axis is parallel to the first direction.

In the above solutions, by setting the rotation axis to be parallel to the first direction, the risk of the battery that is in the constraint space and is movable in the first direction being thrown off due to inertia and disengaging from the constraint space when the rotating mechanism drives the flipping member to rotate can be reduced, thereby improving the flipping quality of the battery, and further improving the manufacturing efficiency of the battery.

According to some embodiments of the present application, the flipping member includes a first support member and a second support member, where the first support member and the second support member are arranged opposite to each other in a second direction, the first support member and the second support member are configured to constrain the battery in the second direction, and the first direction and the second direction are perpendicular to each other.

In the above solutions, by arranging the first support member and the second support member opposite to each other in the second direction to constrain the battery in the second direction, in an aspect, the battery is movable between the first support member and the second support member to enter or leave the constraint space; and in another aspect, the constraint can be provided for the battery, and the risk of the battery disengaging from the constraint space in the process that the flipping member is switched from the first position to the second position is reduced, such that the flipping apparatus can quickly flip the battery. This ensures a fast cycle rate of flipping the battery and thus high manufacturing efficiency of the battery.

According to some embodiments of the present application, the first support member includes a first support body and a first conveying part, where the first conveying part is arranged on the first support body, and the first conveying part is configured to guide the battery to move in the first direction.

In the above solutions, by arranging the first support body, the battery can be effectively supported, thereby reducing the risk of the battery disengaging from the constraint space. By arranging the first conveying part, the battery can be guided to move in the first direction, so as to quickly enter or leave the constraint space, thereby reducing the cycle time of flipping the battery, and further improving the manufacturing efficiency of the battery.

According to some embodiments of the present application, the first conveying part includes a plurality of first rolling parts, where the plurality of first rolling parts are rollably arranged on the first support body and are configured to be in rolling contact with a surface of the battery facing away from the second support member.

In the above solutions, by arranging the plurality of first rolling parts, the surface of the battery is in rolling contact with the plurality of first rolling parts. In an aspect, the battery can be constrained, such that the battery can stably follow the rotation of the flipping member to switch the posture; in another aspect, the battery can be allowed to move in the first direction within the constraint space, so that the efficiency of the battery entering or leaving the accommodating space can be improved, the cycle time of flipping the battery can be reduced, and thus the manufacturing efficiency of the battery can be improved; and in yet another aspect, since the battery is in rolling contact with the first support member, the friction generated during the movement of the battery within the constraint space has less influence on the surface of the battery, thereby reducing the damage to the appearance of the battery due to the flipping of the battery, and thus making the battery have higher quality.

According to some embodiments of the present application, the second support member includes a second support body and a second conveying part, where the second conveying part is arranged on the second support body, and the second conveying part is configured to guide the battery to move in the first direction.

In the above solutions, by arranging the second support body, the battery can be effectively supported, thereby reducing the risk of the battery disengaging from the constraint space. By arranging the second conveying part, the battery can be guided to move in the first direction, so as to quickly enter or leave the constraint space, thereby reducing the cycle time of flipping the battery, and further improving the manufacturing efficiency of the battery.

According to some embodiments of the present application, the second conveying part includes a plurality of second rolling parts, where the plurality of second rolling parts are rollably arranged on the second support body and are configured to be in rolling contact with a surface of the battery facing away from the first support member.

In the above solutions, by arranging the plurality of second rolling parts, the surface of the battery is in rolling contact with the plurality of second rolling parts. In an aspect, the battery can be constrained, such that the battery can stably follow the rotation of the flipping member to switch the posture; in another aspect, the battery can be allowed to move in the first direction within the constraint space, so that the efficiency of the battery entering or leaving the accommodating space can be improved, the cycle time of flipping the battery can be reduced, and thus the manufacturing efficiency of the battery can be improved; and in yet another aspect, since the battery is in rolling contact with the second support member, the friction generated during the movement of the battery within the constraint space has less influence on the surface of the battery, thereby reducing the damage to the appearance of the battery due to the flipping of the battery, and thus making the battery have higher quality.

According to some embodiments of the present application, the flipping member further includes a third support member, where the third support member is located between the first support member and the second support member, the third support member connects the first support member and the second support member, the third support member is configured to constrain the battery in a third direction, and every two of the first direction, the second direction, and the third direction are perpendicular to each other.

In the above solutions, by arranging the third support member, the battery can be constrained in the third direction, such that the battery is switched from the first posture to the second posture along with the rotation of the flipping member, thereby reducing the risk of the battery disengaging from the constraint space in the third direction, such that the battery has a fast flipping cycle rate, and thus the battery has high manufacturing efficiency.

According to some embodiments of the present application, the third support member includes a third support body and a third conveying part, where the third conveying part is arranged on the third support body, and the third conveying part is configured to guide the battery to move in the first direction.

In the above solutions, by arranging the third support body, the battery can be effectively supported, thereby reducing the risk of the battery disengaging from the constraint space. By arranging the third conveying part, the battery can be guided to move in the first direction, so as to quickly enter or leave the constraint space, thereby reducing the cycle time of flipping the battery, and further improving the manufacturing efficiency of the battery.

According to some embodiments of the present application, the third conveying part includes a plurality of third rolling parts, where the plurality of third rolling parts are rollably arranged on the third support body and are configured to be in rolling contact with a surface of the battery in the third direction.

In the above solutions, by arranging the plurality of third rolling parts, the surface of the battery is in rolling contact with the plurality of third rolling parts. In an aspect, the battery can be constrained, such that the battery can stably follow the rotation of the flipping member to switch the posture; in another aspect, the battery can be allowed to move in the first direction within the constraint space, so that the efficiency of the battery entering or leaving the accommodating space can be improved, the cycle time of flipping the battery can be reduced, and thus the manufacturing efficiency of the battery can be improved; and in yet another aspect, since the battery is in rolling contact with the third support member, the friction generated during the movement of the battery within the constraint space has less influence on the surface of the battery, thereby reducing the damage to the appearance of the battery due to the flipping of the battery, and thus making the battery have higher quality.

According to some embodiments of the present application, a distance between the first support member and the second support member is adjustable in the second direction.

In the above solutions, by setting the positions of the first support member and the second support member to be adjustable in the second direction, the size of the constraint space in the second direction can be adjusted, so as to adapt to batteries of different specifications and improve the compatibility of the flipping apparatus.

According to some embodiments of the present application, the first support member includes a first support body, where the first support body is provided with a first strip-shaped hole, a length direction of the first strip-shaped hole is parallel to the second direction, the first support member is connected to the third support member through a first connecting member passing through the first strip-shaped hole, and the first connecting member is configured to be engaged with the first strip-shaped hole in a position-adjustable manner in the second direction.

In the above solutions, by providing the first strip-shaped hole extending in the second direction on the first support body, and allowing the first connecting member to pass through the first strip-shaped hole to connect the first support body and the third support member, the first support member is movable relative to the third support member in the second direction through cooperation between the first connecting member and the first strip-shaped hole, thereby adjusting a position relationship between the first support member and the second support member in the second direction, and thus adjusting the size of the constraint space in the second direction to adapt to batteries of different specifications.

According to some embodiments of the present application, the flipping member further includes a limiting member, where the limiting member is connected to the second support member, and in the third direction, the limiting member and the third support member are spaced apart from each other to limit displacement of the battery in the third direction.

In the above solutions, by setting the limiting member to cooperate with the third support member, the battery can be constrained in the third direction, such that the risk of the battery disengaging from the third direction during the rotation of the flipping member is reduced. This ensures a fast cycle rate of flipping the battery and thus improves the manufacturing efficiency of the battery.

According to some embodiments of the present application, a distance between the limiting member and the third support member is adjustable in the third direction.

In the above solutions, by setting the positions of the limiting member and the third support member to be adjustable in the third direction, the size of the constraint space in the third direction can be adjusted, so as to adapt to batteries of different specifications and improve the compatibility of the flipping apparatus.

According to some embodiments of the present application, the limiting member includes a first portion and a second portion connected to each other, where the first portion and the third support member are spaced apart from each other in the third direction, the second portion is provided with a second strip-shaped hole, a length direction of the second strip-shaped hole is parallel to the third direction, the limiting member is connected to the second support member through a second connecting member passing through the second strip-shaped hole, and the second connecting member is configured to be engaged with the second strip-shaped hole in a position-adjustable manner in the third direction.

In the above solutions, the limiting member has a simple structure and is easy to manufacture. By providing the second strip-shaped hole extending in the third direction on the second portion, and allowing the second connecting member to pass through the second strip-shaped hole to connect the limiting member and the second support member, the limiting member is movable relative to the second support member in the third direction through cooperation between the second connecting member and the second strip-shaped hole, thereby adjusting a position relationship between the first portion and the third support member in the third direction, and thus adjusting the size of the constraint space in the third direction to adapt to batteries of different specifications.

According to some embodiments of the present application, the flipping apparatus further includes a rotating shaft, where each of the flipping members is connected to the rotating shaft, and the rotating mechanism drives all of the flipping members to rotate by driving the rotating shaft to rotate.

In the above solutions, by arranging the rotating shaft, the rotating mechanism can synchronously drive all of the flipping members to rotate, such that the plurality of flipping members can continuously flip the battery, thereby effectively reducing the cycle time of flipping the battery, and further improving the manufacturing efficiency of the battery.

According to some embodiments of the present application, a connecting part is arranged on a side of the second support member facing away from the first support member, and the connecting part is connected to the rotating shaft.

According to some embodiments of the present application, the flipping apparatus further includes a frame, and the flipping member is rotatably arranged on the frame through the rotating shaft. The rotating mechanism includes a driving member and a transmission member, and the driving member is connected to the rotating shaft through the transmission member to drive the flipping member to rotate.

In the above solutions, by arranging the frame, the flipping member is rotatable around the rotation axis under the action of the driving member and the transmission member, so as to be switched from the first position to the second position, such that the battery corresponding to the first position can enter the constraint space, and be switched to the second posture along with the rotation of the flipping member, and finally leaves the constraint space from the position corresponding to the second position to enter the next processing procedure. This achieves the rapid flipping of the battery, and further improves the manufacturing efficiency of the battery.

According to a second aspect, some embodiments of the present application provide a method for flipping a battery, which is applied to the flipping apparatus according to any one of the embodiments of the first aspect. The method includes the following steps:
placing a battery into a constraint space of a flipping member in a first posture;
rotating the flipping member such that the flipping member is switched from the first position to the second position, so as to allow the battery to be flipped to a second posture; and
removing the battery from the constraint space.

According to a third aspect, some embodiments of the present application further provide a device for manufacturing a battery. The device includes a feeding conveyor line, a discharging conveyor line, and the flipping apparatus according to any one of the embodiments of the first aspect. When the flipping member is at the first position, the feeding conveyor line provides the battery in the first posture to the flipping member; and when the flipping member is at the second position, the discharging conveyor line receives the battery that leaves the flipping member and is in the second posture.

In the above solutions, by means of the flipping apparatus according to the first aspect, in cooperation with the feeding conveyor line arranged corresponding to the first position and the discharging conveyor line arranged corresponding to the second position, the battery can quickly enter the constraint space at the portion corresponding to the first position, and is switched to the second position along with the rotation of the flipping member, and can be quickly received by the discharging conveyor line corresponding to the second position to be conveyed to the next processing procedure. This achieves the rapid flipping of the battery, and further improves the manufacturing efficiency of the battery.

According to some embodiments of the present application, the device for manufacturing a battery further includes a pushing mechanism, where the pushing mechanism is configured to push the battery into or out of the constraint space.

In the above solutions, by arranging the pushing mechanism, the battery can be pushed efficiently, such that the battery can quickly enter or leave the constraint space, thereby reducing the cycle time of flipping the battery. Therefore, the battery can have high manufacturing efficiency.

The additional aspects and the advantages of the present application will be partially provided in the following description, will partially become apparent from the following description, or will be learned through the practice of the present application.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a three-dimensional view of a flipping apparatus according to some embodiments of the present application;
FIG. 2 is a top view of a flipping apparatus according to some embodiments of the present application;
FIG. 3 is a side view of a plurality of flipping members according to some embodiments of the present application;
FIG. 4 is a schematic diagram of flipping members according to some embodiments of the present application;
FIG. 5 is a schematic diagram of a plurality of flipping members according to some other embodiments of the present application;
FIG. 6 is a schematic diagram of a flipping apparatus and a battery according to some embodiments of the present application;
FIG. 7 is a side view of a flipping member according to some embodiments of the present application;
FIG. 8 is a perspective view of a flipping member according to some embodiments of the present application;
FIG. 9 is a schematic diagram of a flipping apparatus and a battery according to some other embodiments of the present application;
FIG. 10 is a schematic diagram of a first support member according to some embodiments of the present application;
FIG. 11 is an enlarged view of part A in FIG. 8;
FIG. 12 is a flowchart block diagram of a method for flipping a battery according to some embodiments of the present application; and
FIG. 13 is a schematic diagram of a device for manufacturing a battery according to some embodiments of the present application.

Reference numerals: 100-flipping apparatus; 10-flipping member; 20-rotating mechanism; 21-driving member; 22-transmission member; 30-frame; 31-rotating shaft; 10a-constraint space; 10b-inlet; 10c-outlet; 11-first support member; 110-first support body; 1100-first strip-shaped hole; 111a-first conveying part; 111-first rolling part; 12-second support member; 120-second support body; 121a-second conveying part; 121-second rolling part; 123-connecting part; 13-third support member; 130-third support body; 131a-third conveying part; 131-third rolling part; 14-limiting member; 140-first portion; 141-second portion; 142-second strip-shaped hole; x-first direction; y-second direction; z-third direction; s-rotation axis; 1000-device for manufacturing a battery; 200-feeding conveyor line; 300-discharging conveyor line; 400-pushing mechanism; 2000-battery; 3000-method for flipping a battery.

### DETAILED DESCRIPTION

To make the objectives, technical solutions, and advantages of embodiments of the present application clearer, the technical solutions in the embodiments of the present application will be clearly and comprehensively described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the described embodiments of the present application can be combined with other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the present application, batteries may include lithium-ion batteries, lithium-sulfur batteries, sodium-lithium-ion batteries, sodium-ion batteries, magnesium-ion batteries, or the like. The embodiments of the present application are not limited thereto. The battery may be cylindrical, flat, rectangular parallelepiped-shaped, or in other shapes. The embodiments of the present application are not limited thereto.

How to improve the manufacturing efficiency of the battery is an urgent technical problem to be solved in the battery technologies. During the manufacturing process of a battery, the battery may be required to be in different postures such as lying flat or standing upright. Therefore, a step of flipping the battery is an indispensable step in the battery manufacturing process.

At present, the apparatus for flipping a battery includes a lifting mechanism, a flipping mechanism, and a clamping mechanism. The clamping mechanism implements the clamping of a battery, the flipping mechanism implements the flipping of a cell, and the lifting mechanism implements the lifting of a battery to reduce interference between the battery and the outside. A flipping action of the battery may be divided into at least five steps such as clamping-jacking-flipping-lowering-unclamping-resetting, which affects the manufacturing cycle time and leads to low manufacturing efficiency of the battery. Meanwhile, because the battery is flipped in a clamping manner, there is a risk of the battery slipping and being thrown off due to inertia, which also affects the manufacturing efficiency of the battery.

In view of this, in order to solve the problem that the manufacturing efficiency of the battery is affected due to a slow cycle rate of flipping the battery, some embodiments of the present application provide a flipping apparatus. The flipping apparatus includes flipping members and a rotating mechanism. Each of the flipping members is provided with a constraint space for accommodating a battery to constrain a posture of the battery. The rotating mechanism is connected to the flipping member and is configured to drive the flipping member to rotate around the rotation axis. The flipping member is configured to be switched from the first position to the second position under the driving of the rotating mechanism. When the flipping member is at the first position, the battery enters the channel in a first posture, and when the flipping member is at the second position, the battery is flipped from the first posture to a second posture and leaves the constraint space in the second posture.

In the above solutions, the process of flipping the battery by the flipping apparatus can be decomposed into three steps: the battery entering the constraint space of the flipping member, rotating the flipping member, and the battery leaving the constraint space. Therefore, the battery is flipped by the flipping apparatus, such that the battery is switched from the first posture to the second posture, which can effectively reduce the cycle time of flipping the battery. Therefore, the battery has high flipping efficiency, thereby improving the manufacturing efficiency of the battery. Meanwhile, in the process of flipping the battery, the posture of the battery is switched as the position of the flipping member is switched, and the battery is constrained in the constraint space, so the risk of the battery slipping and being thrown off due to inertia is low, the flipping quality is high, and the manufacturing efficiency of the battery is high.

The flipping apparatus disclosed in the embodiments of the present application includes, but is not limited to, flipping the battery to switch the posture of the battery (for example, switching from an upright posture to a lying-flat posture, or switching from a lying-flat posture to an upright posture), and further flipping other workpieces that need posture switching.

The flipping apparatus disclosed in the embodiments of the present application includes, but is not limited to, being applied to the device for manufacturing a battery, and further being applied to other devices for manufacturing workpieces that need posture switching.

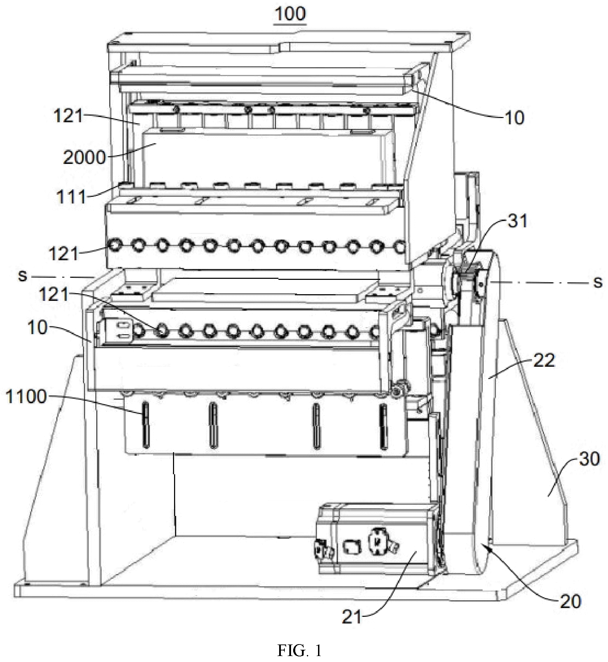

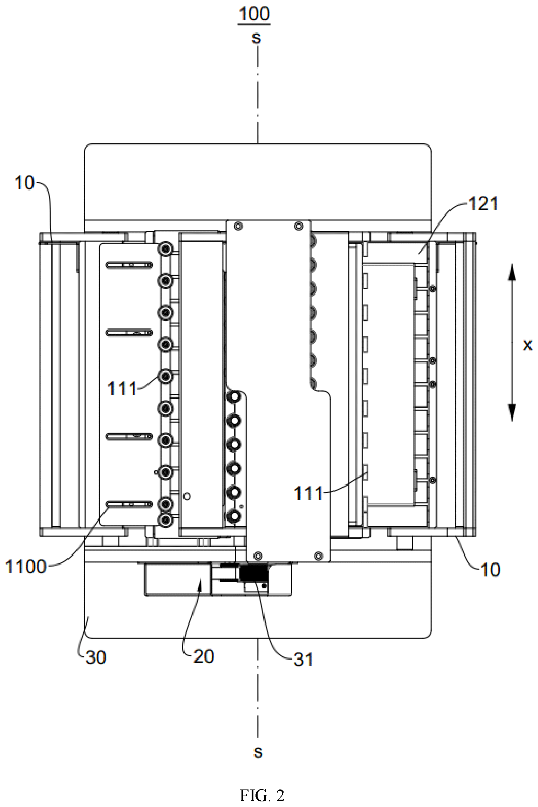

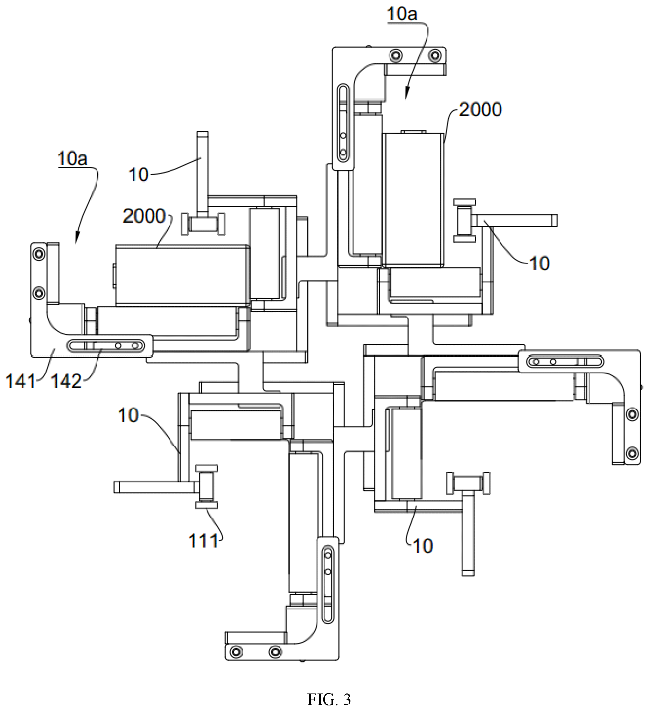

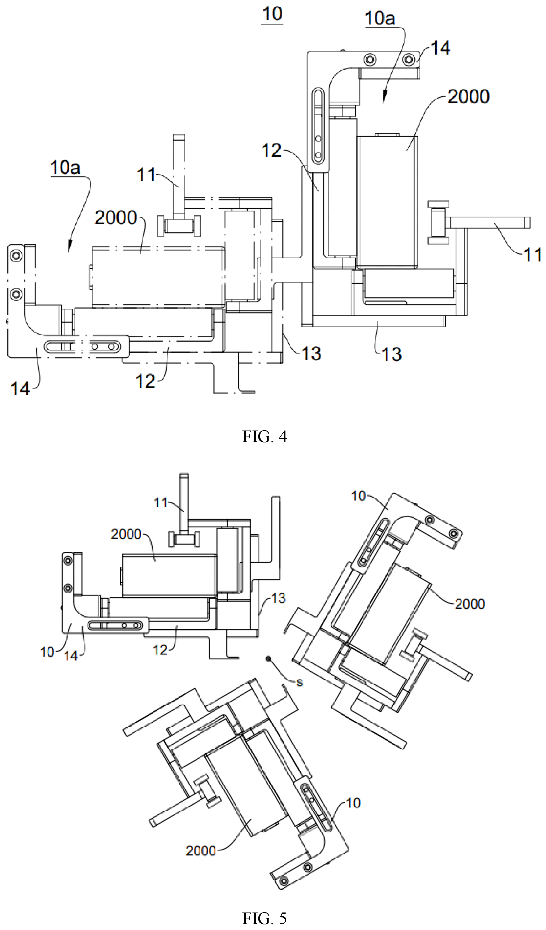

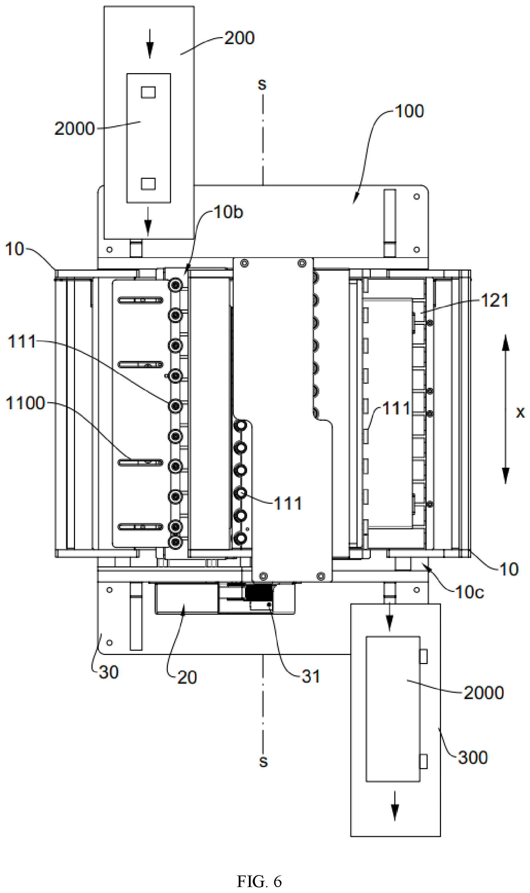

The present application provides a flipping apparatus. Referring to FIG. 1 to FIG. 6, FIG. 1 is a three-dimensional view of a flipping apparatus according to some embodiments of the present application; FIG. 2 is a top view of a flipping apparatus according to some embodiments of the present application; FIG. 3 is a side view of a plurality of flipping members according to some embodiments of the present application; FIG. 4 is a schematic diagram of flipping members according to some embodiments of the present application; FIG. 5 is a schematic diagram of a plurality of flipping members according to some other embodiments of the present application; and FIG. 6 is a schematic diagram of a flipping apparatus and a battery according to some embodiments of the present application.

The flipping apparatus 100 includes flipping members 10 and a rotating mechanism 20. A plurality of the flipping members 10 are provided, and each of the flipping members 10 is provided with a constraint space 10a for accommodating a battery 2000 to constrain the posture of the battery 2000. The rotating mechanism 20 is connected to each of the flipping members 10 and is configured to drive each of the flipping members 10 to rotate around a rotation axis s. Each of the flipping members 10 is configured to be cyclically switched between a first position and a second position under the driving of the rotating mechanism 20. When the flipping member 10 is at the first position, the battery 2000 enters the constraint space 10a in a first posture, and when the flipping member 10 is at the second position, the battery 2000 is flipped from the first posture to a second posture and leaves the constraint space 10a in the second posture.

The flipping member 10 can provide a constraint space 10a for the battery 2000, and the constraint space 10a accommodates the battery 2000 and can provide a constraint for the battery 2000, such that the battery 2000 is rotatable with the flipping member 10. Meanwhile, during the rotation of the flipping member 10, the battery 2000 will not rotate in the constraint space 10a. The "posture" may be understood as a position state of the battery 2000 in space. For example, with reference to a horizontal plane, the posture may include an upright posture in which the battery is upright on the horizontal plane, and may include a lying-flat posture in which the battery lies flat on the horizontal plane. In some embodiments, two, three, or four flipping members 10 may be provided.

In some embodiments, the constraint space 10a may be enclosed by a plurality of the flipping members 10. For example, the flipping member 10 may include two opposite support members, the two opposite support members are spaced apart from each other to jointly form the constraint space 10a and provide a constraint for the battery 2000 between the two support members, and the battery 2000 enters or leaves the constraint space 10a by the sides of the two support members. For another example, the flipping member 10 may include three support members. Two of the support members are spaced apart from each other, and the other support member is located between the two support members arranged opposite to each other. The three support members jointly form the constraint space 10a, and when the flipping member 10 is at the first position, the other support member plays a role in supporting the battery 2000 to counteract the gravity of the battery 2000. During the rotation of the flipping member 10, one of the two support members supports the battery 2000 to prevent the battery 2000 from disengaging.

Illustratively, in some embodiments below, the first posture of the battery 2000 may be considered as a posture when the battery 2000 is upright, and the second posture of the battery 2000 may be considered as a posture when the battery 2000 is lying flat. In some other embodiments, the first posture of the battery 2000 may be considered as a posture of the battery 2000 when the battery is lying flat or other postures, and the second posture of the battery 2000 may be considered as a posture of the battery 2000 when the battery is upright or other postures.

The rotating mechanism 20 is a mechanism capable of driving the flipping member 10 to rotate around the rotation axis s. Illustratively, the rotating mechanism 20 may include a motor and a synchronization belt, the flipping member 10 is rotatably arranged on the frame 30 through a rotating shaft 31, and the motor drives the rotating shaft 31 to rotate through the synchronization belt to drive the flipping member 10 to rotate. In some embodiments, the motor may be a servo motor.

That "each of the flipping members 10 is configured to be cyclically switched between a first position and a second position under the driving of the rotating mechanism 20" can be understood as that the flipping member 10 is rotatable from the first position to the second position under the driving of the rotating mechanism 20, and is rotatable from the second position to the second position under the next driving of the rotating mechanism 20, so that the flipping member is continuously driven to be cyclically switched between the first position and the second position. Referring to FIG. 4, the flipping member 10 on the right side in FIG. 4 is drawn with solid lines, which may represent that the flipping member 10 is at the first position. The flipping member 10 on the left side in FIG. 4 is drawn with dashed lines, which may represent that the flipping member 10 is at the second position.

In some embodiments, each actuation of the rotating mechanism 20 causes the rotation angle of the flipping members 10 to be the same or different. Illustratively, each actuation of the rotating mechanism 20 causes the rotation angle of the flipping members 10 to be the same. For example, each actuation of the rotating mechanism 20 causes one of the plurality of flipping members 10 to be switched from the first position to the second position, and another of the plurality of flipping members 10 to be switched from the second position to the first position. Alternatively, each actuation of the rotating mechanism 20 causes the rotation angle of the flipping members 10 to be different. For example, the rotating mechanism 20 first drives one of the flipping members 10 to rotate by a first angle value to be switched from the first position to the second position, and then drives this flipping member to rotate by a second angle value to be switched from the second position to the first position.

It should be noted that, each actuation of the rotating mechanism 20 causes the rotation angle of the flipping members 10 to be the same, and the value of the angle by which any flipping member 10 rotates by each actuation of the rotating mechanism 20 is not limited, and may be determined based on the actual number of flipping members 10 and the requirements of battery posture switching. Illustratively, referring to FIG. 5, FIG. 5 is a schematic diagram of a plurality of flipping members according to some other embodiments of the present application. Three flipping members 10 are provided, the angle between every two adjacent flipping members 10 is 120°, and each actuation of the rotating mechanism 20 causes each flipping member 10 to rotate by 120°. Illustratively, four flipping members 10 are provided, the angle between every two adjacent flipping members 10 is 90°, and each actuation of the rotating mechanism 20 causes each flipping member 10 to rotate by 90°.

That "when the flipping member 10 is at the first position, the battery 2000 enters the constraint space 10a in a first posture" can be understood as that the battery 2000 in the first posture is transported by a feeding conveyor line 200, and when the flipping member 10 is at the first position, an inlet 10b of the constraint space 10a for the battery 2000 to enter can correspond to the incoming direction of the battery 2000, such that the battery 2000 can enter the constraint space 10a in the first posture. In some embodiments, when the first posture of the battery 2000 is the upright posture, the first position can be understood as that the flipping member 10 is at a position that enables the battery 2000 to stand upright in the flipping member 10, for example, a position that can provide support for the bottom surface of the battery 2000 to enable the battery 2000 to stand upright, or a position that can provide an upward force for the battery 2000 to counteract gravity to enable the battery 2000 to stand upright.

That "when the flipping member 10 is at the second position, the battery 2000 is flipped from the first posture to a second posture and leaves the constraint space 10a in the second posture" can be understood as that the flipping member 10 is driven by the rotating mechanism 20 to rotate from the first position to the second position, and the battery 2000 located in the constraint space 10a rotates accordingly to be switched from the first posture to the second posture. At this time, an outlet 10c of the constraint space 10a for the battery 2000 to leave can correspond to the discharging direction, such that the battery 2000 leaves the constraint space 10a in the second posture to be received by the discharging conveyor line 300 and conveyed to the next processing procedure. In some embodiments, when the second posture of the battery 2000 is the lying-flat posture, the second position can be understood as that the flipping member 10 is at a position that enables the battery 2000 to lie flat in the flipping member 10, for example, a position that can provide support for the side surface of the battery 2000 to make the battery 2000 lie flat, or a position that can provide an upward force for the battery 2000 to counteract gravity to make the battery 2000 lie flat.

In the above solutions, the process of flipping the battery 2000 by the flipping apparatus 100 can be decomposed into three steps: the battery entering the constraint space of the flipping member, rotating the flipping member, and the battery leaving the constraint space. Therefore, the battery 2000 is flipped by the flipping apparatus 100, such that the battery 2000 is switched from the first posture to the second posture, which can effectively reduce the cycle time of flipping the battery 2000. Therefore, the battery 2000 has high flipping efficiency, thereby improving the manufacturing efficiency of the battery 2000. Meanwhile, in the process of flipping the battery 2000, the posture of the battery 2000 is switched as the position of the flipping member 10 is switched, and the battery 2000 is constrained in the constraint space, so the risk of the battery 2000 slipping and being thrown off due to inertia is low, the flipping quality is high, and the manufacturing efficiency of the battery is high.

According to some embodiments of the present application, all of the flipping members 10 are evenly spaced apart from each other around the rotation axis.

In some embodiments, the angle between every two adjacent flipping members 10 is the same. Optionally, the angle between every two adjacent flipping members 10 is 30°, 60°, 90°, 120°, 180°, or other angles.

Illustratively, referring to FIG. 3, four flipping members 10 are provided, the four flipping members 10 are evenly spaced apart from each other around the rotation axis, and the angle between every two adjacent flipping members 10 is 90°.

Illustratively, referring to FIG. 5, three flipping members 10 are provided, the three flipping members 10 are evenly spaced apart from each other around the rotation axis, and the angle between every two adjacent flipping members 10 is 120°.

In the above solutions, by setting equal angles between every two adjacent flipping members 10, each actuation of the rotating mechanism 20 causes one of the flipping members 10 to complete a full cycle. This ensures a fast cycle rate of flipping the battery and thus improves the manufacturing efficiency of the battery.

In some other embodiments, all of the flipping members 10 may be unevenly spaced apart from each other around the rotation axis. For example, an angle between two of the flipping members 10 is 90°, and an angle between the other two adjacent flipping members is 180°.

According to some embodiments of the present application, the flipping member 10 is configured to rotate by 90° under the driving of the rotating mechanism 20 to be switched from the first position to the second position.

In some embodiments, the first posture of the battery 2000 corresponding to the first position may be an upright posture, and the second posture of the battery 2000 corresponding to the second position may be a lying-flat posture. That is, the flipping member 10 is driven by rotation, such that the battery 2000 can be switched from the upright posture to the lying-flat posture.

The rotation angle of the flipping member 10 by the rotating mechanism 20 may affect the switching of the posture of the battery 2000 in the constraint space 10a. In this regard, when the flipping member 10 is driven by the rotating mechanism 20 to rotate 90 to be switched from the first position to the second position, the battery 2000 in the constraint space 10a can be flipped by 90°, for example, from the lying-flat posture to the vertical posture, or from the vertical posture to the lying-flat posture.

Optionally, in some embodiments in which "the flipping member 10 is configured to rotate by 90° under the driving of the rotating mechanism 20 to be switched from the first position to the second position", two, three, or four flipping members 10 may be provided. For one of the flipping members 10, the rotating mechanism 20 may first rotate by 90°, such that one of the flipping members 10 is switched from the first position to the second position, and then rotates by 270° to return to the first position. The remaining flipping members 10 are loaded when appropriate, and then rotate by a corresponding angle according to the requirements of battery flipping.

In the above solutions, the rotation angle between the first position and the second position is set to 90°, such that the flipping angle of the battery is 90°, thereby meeting a current battery processing requirement and improving the manufacturing efficiency of the battery.

According to some embodiments of the present application, referring to FIG. 3, four flipping members 10 are provided, and the four flipping members 10 are evenly spaced apart from each other around the rotation axis.

In the above solutions, four flipping members 10 are provided, and the angle between every two adjacent flipping members 10 is 90, such that each actuation of the rotating mechanism 20 causes each of the flipping members 10 to rotate by 90°. In this way, a plurality of batteries are allowed to rotate by 90°, continuously, thereby effectively reducing the cycle time of flipping the batteries and thus improving the manufacturing efficiency of the batteries.

According to some embodiments of the present application, referring to FIG. 6, the constraint space 10a includes an inlet 10b and an outlet 10c. The inlet 10b is configured to allow the battery 2000 to enter the constraint space 10a, and the outlet 10c is configured to allow the battery 2000 to leave the constraint space 10a.

The inlet 10b is a portion where the constraint space 10a allows the battery 2000 to enter, and the outlet 10c is a portion where the constraint space 10a allows the battery 2000 to leave. Illustratively, the flipping member 10 is provided with a first opening, and the first opening is in communication with the constraint space 10a to form an inlet 10b for the battery 2000 to enter the constraint space 10a; the flipping member 10 is provided with a second opening, and the second opening is in communication with the constraint space 10a to form an outlet 10c for the battery 2000 to leave the constraint space 10a.

In some embodiments, the inlet 10b and the outlet 10c are at different positions of the flipping member 10, such that the battery 2000 can leave the constraint space 10a through different portions of the constraint space 10a. Therefore, when the feeding conveyor line 200 and the discharging conveyor line 300 are arranged, the feeding conveyor line 200 and the discharging conveyor line 300 can be at different positions to reduce the risk of mutual interference. Illustratively, along a linear direction, the inlet 10b and the outlet 10c are respectively located at two opposite ends of the constraint space 10a, allowing the battery 2000 to move straight into and out of the constraint space 10a. Alternatively, the inlet 10b and the outlet 10c are oriented perpendicular to each other.

In the above solutions, by providing the inlet 10b and the outlet 10c, it is defined that the battery 2000 enters and leaves the constraint space 10a from different portions, such that the movement of the battery 2000 in and out can be simplified, the risk of interference of the battery 2000 in and out can be reduced, and the cycle time of flipping the battery 2000 can be reduced. Therefore, the battery 2000 can have high manufacturing efficiency.

In some embodiments, the portions of the constraint space 10a for the battery 2000 to enter and leave may be the same part, and the battery 2000 located in the constraint space 10a may be discharged before the battery 2000 enters the constraint space 10a.

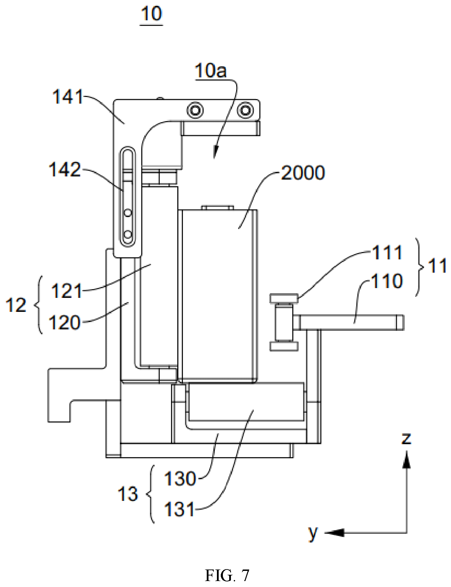

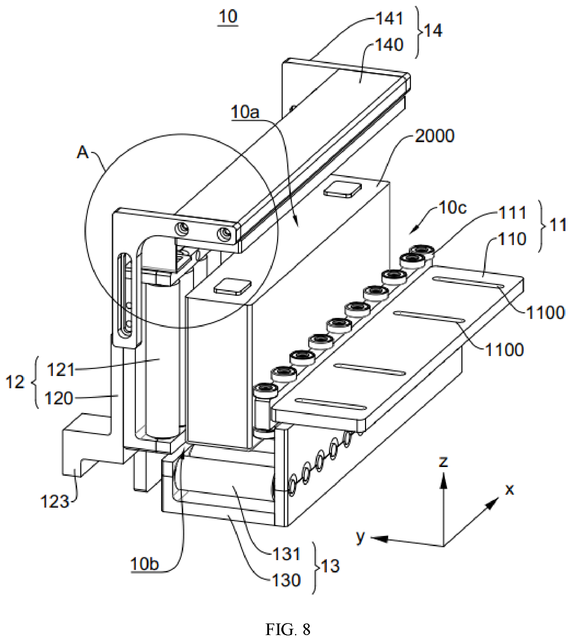

According to some embodiments of the present application, referring to FIG. 7 and FIG. 8, FIG. 7 is a side view of a flipping member 10 according to some embodiments of the present application, and FIG. 8 is a perspective view of a flipping member 10 according to some embodiments of the present application. The inlet 10b and the outlet 10c are opposite to each other in the first direction x.

In some embodiments, the constraint space 10a allows the battery 2000 to move in the first direction x to enter or leave the constraint space 10a.

In some embodiments, the constraint space 10a may be regarded as a channel for the battery 2000 to move in the constraint space 10a along the first direction x. In the first direction x, one end of the constraint space 10a forms an inlet 10b, and the other end of the constraint space forms an outlet 10c.

Illustratively, one or more batteries 2000 in the first posture are transported by the feeding conveyor line 200, and when the flipping member 10 is at the first position, the battery 2000 can enter the constraint space 10a through the inlet 10b in the first posture, and the one or more batteries 2000 can enter the constraint space 10a through the inertia during transportation or be pushed into the constraint space 10a by a jacking mechanism in a linear motion trajectory along the first direction x. The flipping member 10 is driven by the rotating mechanism 20 to rotate to the second position, and the one or more batteries 2000 may be pushed out of the constraint space 10a in a linear trajectory along the first direction x by another jacking mechanism.

In the above solutions, the inlet 10b and the outlet 10c are arranged opposite to each other in the first direction x, such that the battery 2000 can move in a linear motion trajectory along the first direction x in the constraint space 10a, which can reduce the difficulty of the battery 2000 entering and leaving the channel. For example, by means of pushing, the battery 2000 can quickly enter and leave the channel, and meanwhile, the risk of interference of the battery 2000 in and out can also be reduced, such that the cycle time of flipping the battery 2000 is reduced, and the manufacturing efficiency of the battery 2000 is further improved.

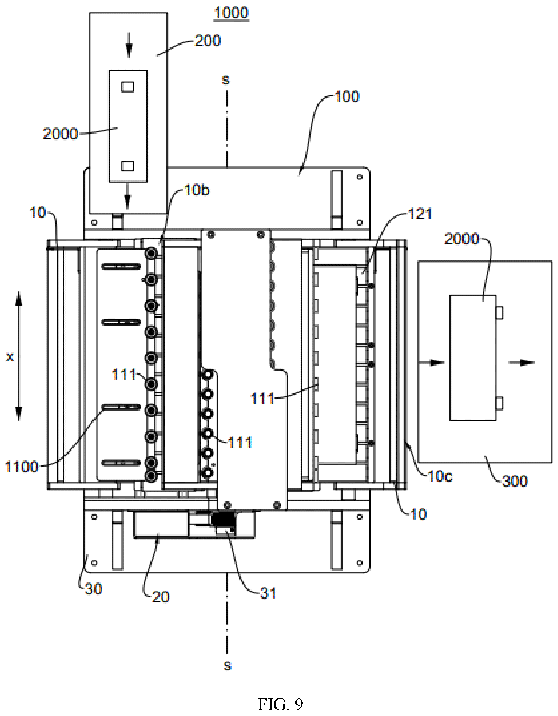

In some other embodiments, the inlet 10b and the outlet 10c are oriented in different directions. Illustratively, as shown in FIG. 9, FIG. 9 is a schematic diagram of a flipping apparatus 100 and a battery 2000 according to some other embodiments of the present application. The inlet 10b may be oriented in the first direction x, and in FIG. 9, the battery 2000 moves downward by the feeding conveyor line 200 to enter the constraint space 10a. The outlet 10c may be oriented perpendicular to the first direction x. In FIG. 8, the battery 2000 moves rightward to leave the constraint space 10a to be received by the discharging conveyor line 300. In some embodiments, an implementation solution that can enable the battery 2000 to leave the constraint space 10a from another direction may include that a jacking mechanism is arranged in the flipping member 10, and the jacking mechanism can push the battery 2000 toward the outlet 10c.

According to some embodiments of the present application, the rotation axis s is parallel to the first direction x.

In some embodiments, the rotation axis s may be arranged in a same direction as the first direction x.

In the above solutions, by setting the rotation axis s to be parallel to the first direction x, the risk of the battery 2000 that is in the constraint space 10a and is movable in the first direction x being thrown off due to inertia and disengaging from the constraint space 10a when the rotating mechanism 20 drives the flipping member 10 to rotate can be reduced, thereby improving the flipping quality of the battery 2000, and further improving the manufacturing efficiency of the battery 2000.

According to some embodiments of the present application, referring to FIG. 7 and FIG. 8, the flipping member 10 includes a first support member 11 and a second support member 12. The first support member 11 and the second support member 12 are arranged opposite to each other in a second direction y, the first support member 11 and the second support member 12 are configured to constrain the battery 2000 in the second direction y, and the first direction x and the second direction y are perpendicular to each other.

The first support member 11 and the second support member 12 are two members spaced apart from each other. In the second direction y, the first support member 11 and the second support member 12 can constrain the battery 2000, such that the battery 2000 is stably located in the constraint space 10a. In some embodiments, the first support member 11 and the second support member 12 are at least part of the flipping members 10 that form the constraint space 10a.

In some embodiments, the battery 2000 is square, a thickness direction of the battery 2000 may be parallel to the second direction y, a width direction of the battery 2000 may be parallel to the first direction x, a height direction of the battery 2000 may be parallel to the third direction z, and every two of the third direction z, the second direction y, and the first direction x are perpendicular to each other.

In some embodiments, the distance between the first support member 11 and the second support member 12 in the second direction y may be greater than or equal to the size of the battery 2000 in the second direction y, so as to allow the battery 2000 to enter between the first support member 11 and the second support member 12 in the first direction x. Meanwhile, during the rotation of the flipping member 10, the first support member 11 and the second support member 12 constrain the battery 2000.

In the above solutions, by arranging the first support member 11 and the second support member 12 opposite to each other in the second direction y to constrain the battery 2000 in the second direction y, in an aspect, the battery 2000 is movable between the first support member 11 and the second support member 12 to enter or leave the constraint space 10a; and in another aspect, the constraint can be provided for the battery 2000, and the risk of the battery 2000 disengaging from the constraint space 10a in the process that the flipping member 10 is switched from the first position to the second position is reduced, such that the flipping apparatus 100 can quickly flip the battery 2000. This ensures a fast cycle rate of flipping the battery 2000 and thus high manufacturing efficiency of the battery 2000.

According to some embodiments of the present application, referring to FIG. 7 and FIG. 8, the first support member 11 includes a first support body 110 and a first conveying part 111a. The first conveying part 111a is arranged on the first support body 110, and the first conveying part 111a is configured to guide the battery 2000 to move in the first direction x.

In some embodiments, the first support body 110 is a support part of the first support member 11. Illustratively, the first support body 110 is plate-shaped, the first support body 110 is connected to the second support member 12 by using another member, and the first conveying part 111a is arranged on the side of the first support body 110 facing the battery 2000.

The first conveying part 111a is configured to guide the battery 2000 to move in the first direction x, which can be understood as that the battery 2000 may move in the first direction x under the action of the first conveying part 111a, so as to quickly enter or leave the constraint space 10a. In some embodiments, the first conveying part 111a may provide power for the battery 2000 to move in the first direction x, or the first conveying part 111a may assist the battery 2000 in moving along the first direction x.

Optionally, the first conveying part 111a may include a belt conveying mechanism, a drum rotating mechanism, or another mechanism that can provide power for the battery 2000 to move in the first direction x.

Optionally, the first conveying part 111a may be a structural member that can be in sliding contact or rolling contact with the battery 2000, such that the battery 2000 can quickly enter or leave the constraint space 10a with the assistance of the first conveying part 111a under the push of external power.

In the above solutions, by arranging the first support body 110, the battery 2000 can be effectively supported, thereby reducing the risk of the battery 2000 disengaging from the constraint space 10a. By arranging the first conveying part 111a, the battery 2000 can be guided to move in the first direction x, so as to quickly enter or leave the constraint space 10a, thereby reducing the cycle time of flipping the battery, and further improving the manufacturing efficiency of the battery.

According to some embodiments of the present application, referring to FIG. 7 and FIG. 8, the first conveying part 111a includes a plurality of first rolling parts 111, and the plurality of first rolling parts 111 are rollably arranged on the first support body 110 and are configured to be in rolling contact with the surface of the battery 2000 facing away from the second support member 12.

In some embodiments, the first support body 110 is provided with an end surface facing the second support member 12, and the plurality of first rolling parts 111 are arranged on the end surface facing the second support member 12.

The first rolling part 111 may include a roller arranged on the first support body 110. The plurality of first rolling parts 111 are disposed in the first direction x. When the battery 2000 is located in the constraint space 10a, that is, between the first support member 11 and the second support member 12, the roller of the first rolling part 111 can be in rolling contact with the surface of the battery 2000.

In some embodiments, the first conveying part 111a may also include one first rolling part 111.

In the above solutions, by arranging the plurality of first rolling parts 111, the surface of the battery 2000 is in rolling contact with the plurality of first rolling parts 111. In an aspect, the battery 2000 can be constrained, such that the battery 2000 can stably follow the rotation of the flipping member 10 to switch the posture; in another aspect, the battery 2000 can be allowed to move in the first direction x within the constraint space 10a, so that the efficiency of the battery 2000 entering or leaving the accommodating space can be improved, the cycle time of flipping the battery 2000 can be reduced, and thus the manufacturing efficiency of the battery 2000 can be improved; and in yet another aspect, since the battery 2000 is in rolling contact with the first support member 11, the friction generated during the movement of the battery 2000 within the constraint space 10a has less influence on the surface of the battery 2000, thereby reducing the damage to the appearance of the battery 2000 due to the flipping of the battery 2000, and thus making the battery 2000 have higher quality.

According to some embodiments of the present application, referring to FIG. 7 and FIG. 8, the second support member 12 includes a second support body 120 and a second conveying part 121a. The second conveying part 121a is arranged on the second support body 120, and the second conveying part 121a is configured to guide the battery 2000 to move in the first direction x.

In some embodiments, the second support body 120 is a support part of the second support member 12. Illustratively, the first support body 110 is plate-shaped, the second support body 120 is connected to the first support member 11 by using another member, and the second conveying part 121a is arranged on the side of the second support body 120 facing the battery 2000.

The second conveying part 121a is configured to guide the battery 2000 to move in the first direction x, which can be understood as that the battery 2000 may move in the first direction x under the action of the second conveying part 121a, so as to quickly enter or leave the constraint space 10a. In some embodiments, the second conveying part 121a may provide power for the battery 2000 to move in the first direction x, or the second conveying part 121a may assist the battery 2000 in moving along the first direction x.

Optionally, the second conveying part 121a may include a belt conveying mechanism, a drum rotating mechanism, or another mechanism that can provide power for the battery 2000 to move in the first direction x.

Optionally, the second conveying part 121a may be a structural member that can be in sliding contact or rolling contact with the battery 2000, such that the battery 2000 can quickly enter or leave the constraint space 10a with the assistance of the second conveying part 121a under the push of external power.

In the above solutions, by arranging the second support body 120, the battery 2000 can be effectively supported, thereby reducing the risk of the battery 2000 disengaging from the constraint space 10a. By arranging the second conveying part 121a, the battery 2000 can be guided to move in the first direction x, so as to quickly enter or leave the constraint space 10a, thereby reducing the cycle time of flipping the battery, and further improving the manufacturing efficiency of the battery.

According to some embodiments of the present application, the second conveying part 121a includes a plurality of second rolling parts 121. The plurality of second rolling parts 121 are rollably arranged on the second support body 120 and are configured to be in rolling contact with the surface of the battery 2000 facing away from the first support member 11.

In some embodiments, an accommodating groove is formed on the surface of the second support body 120 facing the first support member 11, the plurality of second rolling parts 121 are arranged in the accommodating groove, and a portion of the second rolling part 121 that is configured to be in rolling contact with the battery 2000 protrudes from the accommodating groove.

In some embodiments, the second support body 120 is provided with a connecting part 123, the connecting part 123 is located on the surface of the second support body 120 facing away from the first support member 11, and the connecting part 123 may be connected to the rotating mechanism 20. For example, the connecting part 123 is connected to the rotating shaft 31, and the rotating mechanism 20 drives the rotating shaft 31 to rotate to drive the flipping member 10 to rotate.

The second rolling part 121 may include a roller arranged on the second support body 120. The plurality of second rolling parts 121 are disposed in the first direction x. When the battery 2000 is located in the constraint space 10a, that is, between the first support member 11 and the second support member 12, the roller of the second rolling part 121 can be in rolling contact with the surface of the battery 2000.

In some embodiments, the first support member 11 includes a plurality of first rolling parts 111, the second support member 12 includes a plurality of second rolling parts 121, and two surfaces of the battery 2000 opposite to each other in the second direction y are in rolling fit with the plurality of first rolling parts 111 and the plurality of second rolling parts 121, respectively.

In the above solutions, by arranging the plurality of second rolling parts 121, the surface of the battery 2000 is in rolling contact with the plurality of second rolling parts 121. In an aspect, the battery 2000 can be constrained, such that the battery 2000 can stably follow the rotation of the flipping member 10 to switch the posture; in another aspect, the battery 2000 can be allowed to move in the first direction x within the constraint space 10a, so that the efficiency of the battery 2000 entering or leaving the accommodating space can be improved, the cycle time of flipping the battery 2000 can be reduced, and thus the manufacturing efficiency of the battery 2000 can be improved; and in yet another aspect, since the battery 2000 is in rolling contact with the second support member 12, the friction generated during the movement of the battery 2000 within the constraint space 10a has less influence on the surface of the battery 2000, thereby reducing the damage to the appearance of the battery 2000 due to the flipping of the battery 2000, and thus making the battery 2000 have higher quality.

According to some embodiments of the present application, referring to FIG. 7 and FIG. 8, the flipping member 10 further includes a third support member 13. The third support member 13 is located between the first support member 11 and the second support member 12, the third support member 13 connects the first support member 11 and the second support member 12, the third support member 13 is configured to constrain the battery 2000 in a third direction z, and every two of the first direction x, the second direction y, and the third direction z are perpendicular to each other.

The third support member 13 is a member arranged between the first support member 11 and the second support member 12, and the third support member 13 is configured to constrain the battery 2000 in the third direction z. Illustratively, when the flipping member 10 is at the first position, the third support member 13 supports the battery 2000 to counteract the gravity of the battery 2000. When the flipping member 10 is switched from the first position to the second position, the second support member 12 supports the battery 2000, and finally the second support member 12 counteracts the gravity of the battery 2000.

In some embodiments, as shown in FIG. 4, the distance between the first support member 11 and the second support member 12 may be greater than the size of the battery 2000 in the second direction y, such that the battery 2000 can have a gap with the first support member 11 and/or the second support member 12. When the flipping member 10 is at the first position, the third support member 13 supports the battery 2000 to counteract the gravity of the battery 2000. When the flipping member 10 is switched from the first position to the second position, the battery 2000 is inclined and supported by the second support member 12, and finally the battery 2000 is switched from the upright posture to the lying-flat posture, and the second support member 12 supports the battery 2000 and counteracts the gravity of the battery 2000.

In the above solutions, by arranging the third support member 13, the battery 2000 can be constrained in the third direction z, such that the battery 2000 is switched from the first posture to the second posture along with the rotation of the flipping member 10, thereby reducing the risk of the battery 2000 disengaging from the constraint space 10a in the third direction z, such that the battery 2000 has a fast flipping cycle rate, and thus the battery 2000 has high manufacturing efficiency.

According to some embodiments of the present application, referring to FIG. 7 and FIG. 8, the third support member 13 includes a third support body 130 and a third conveying part 131a. The third conveying part 131a is arranged on the third support body 130, and the third conveying part 131a is configured to guide the battery 2000 to move in the first direction x.

In some embodiments, the third support body 130 is a support part of the third support member 13, and the third conveying part 131a is mounted on the third support body 130. Illustratively, the third support body 130 is plate-shaped, the third support body 130 connects the first support body 110 and the second support body 120, and the third conveying part 131a is arranged on the side of the third support body 130 facing the battery 2000.

The third conveying part 131a is configured to guide the battery 2000 to move in the first direction x, which can be understood as that the battery 2000 may move in the first direction x under the action of the third conveying part 131a, so as to quickly enter or leave the constraint space 10a. In some embodiments, the third conveying part 131a may provide power for the battery 2000 to move in the first direction x, or the third conveying part 131a may assist the battery 2000 in moving along the first direction x.

Optionally, the third conveying part 131a may include a belt conveying mechanism, a drum rotating mechanism, or another mechanism that can provide power for the battery 2000 to move in the first direction x.

Optionally, the third conveying part 131a may be a structural member that can be in sliding contact or rolling contact with the battery 2000, such that the battery 2000 can quickly enter or leave the constraint space 10a with the assistance of the third conveying part 131a under the push of external power.

In the above solutions, by arranging the third support body 130, the battery 2000 can be effectively constrained, thereby reducing the risk of the battery 2000 disengaging from the constraint space 10a. By arranging the third conveying part 131a, the battery 2000 can be guided to move in the first direction x, so as to quickly enter or leave the constraint space 10a, thereby reducing the cycle time of flipping the battery, and further improving the manufacturing efficiency of the battery.

According to some embodiments of the present application, referring to FIG. 7 and FIG. 8, the third conveying part 131a includes a plurality of third rolling parts 131. The plurality of third rolling parts 131 are rollably arranged on the third support body 130 and are configured to be in rolling contact with the surface of the battery 2000 in the third direction z.

In some embodiments, an accommodating groove is formed on the surface of the second support body 120 located between the first support body 110 and the second support body 120, the plurality of third rolling parts 131 are arranged in the accommodating groove, and a portion of the third rolling part 131 that is configured to be in rolling contact with the battery 2000 protrudes from the accommodating groove.

The third rolling part 131 may include a roller arranged on the third support body 130. The plurality of third rolling parts 131 are disposed in the first direction x. When the battery 2000 is located in the constraint space 10a, the roller of the third rolling part 131 can be in rolling contact with the surface of the battery 2000. Illustratively, the battery 2000 enters the constraint space 10a in an upright posture, and the bottom surface of the battery 2000 is in rolling contact with the third support body 130.

In the above solutions, by arranging the plurality of third rolling parts 131, the surface of the battery 2000 is in rolling contact with the plurality of third rolling parts 131. In an aspect, the battery 2000 can be constrained, such that the battery 2000 can stably follow the rotation of the flipping member 10 to switch the posture; in another aspect, the battery 2000 can be allowed to move in the first direction x within the constraint space 10a, so that the efficiency of the battery 2000 entering or leaving the accommodating space can be improved, the cycle time of flipping the battery 2000 can be reduced, and thus the manufacturing efficiency of the battery 2000 can be improved; and in yet another aspect, since the battery 2000 is in rolling contact with the third support member 13, the friction generated during the movement of the battery 2000 within the constraint space 10a has less influence on the surface of the battery 2000, thereby reducing the damage to the appearance of the battery 2000 due to the flipping of the battery 2000, and thus making the battery 2000 have higher quality.

According to some embodiments of the present application, a distance between the first support member 11 and the second support member 12 is adjustable in the second direction y.

In some embodiments, the first support member 11 is adjustable in position relative to the third support member 13 in the second direction y to adjust the distance between the first support member 11 and the second support member 12 in the second direction y. In some embodiments, the second support member 12 is adjustable in position relative to the third support member 13 in the second direction y to adjust the distance between the first support member 11 and the second support member 12 in the second direction y. In some other embodiments, the first support member 11 is adjustable in position relative to the third support member 13 in the second direction y, and the second support member 12 is adjustable in position relative to the third support member 13 in the second direction y, thereby adjusting the distance between the first support member 11 and the second support member 12 in the second direction y.

Illustratively, taking "the first support member 11 is adjustable in position relative to the third support member 13 in the second direction y" as an example, a position adjustment structure may be arranged between the third support member 13 and the first support member 11. Optionally, the first support member 11 is provided with a strip-shaped hole extending in the second direction y, and the connection between the third support member 13 and the first support member 11 is achieved by the connecting member passing through the strip-shaped hole, while the connecting member is slidable relative to the strip-shaped hole. Optionally, the third support member 13 is provided with a cylinder, a telescopic rod of the cylinder moves in the second direction y, the first support member 11 is arranged on the telescopic rod, and the position of the third support member 13 is adjusted in the second direction y under the driving of the cylinder. Optionally, the first support member 11 is provided with a plurality of through holes spaced apart from each other in the second direction y, and the first support member 11 is connected to the third support member 13 by selecting any one or more through holes and passing through the through holes through a threaded member, thereby adjusting the distance between the first support member 11 and the second support member 12.

In the above solutions, by setting the positions of the first support member 11 and the second support member 12 to be adjustable in the second direction y, the size of the constraint space 10a in the second direction y can be adjusted, so as to adapt to batteries 2000 of different specifications and improve the compatibility of the flipping apparatus 100.

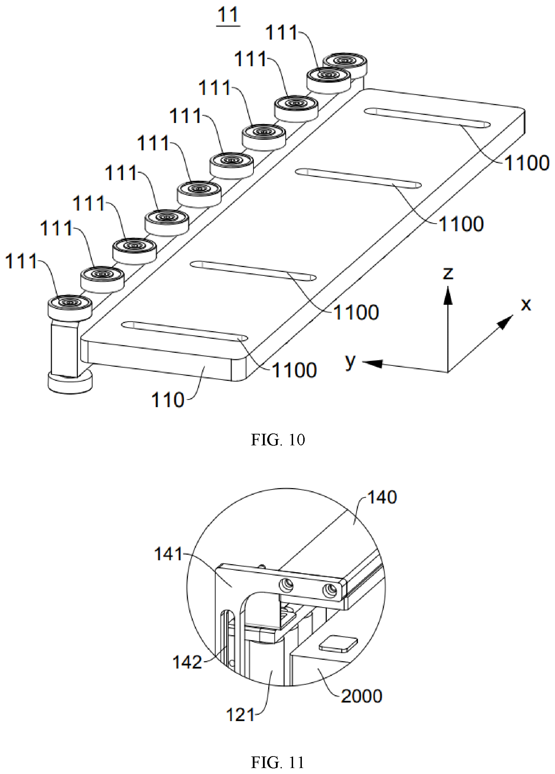

According to some embodiments of the present application, referring to FIG. 8 and FIG. 10, FIG. 10 is a schematic diagram of a first support member 11 according to some embodiments of the present application.

The first support member 11 includes a first support body 110. The first support body 110 is provided with a first strip-shaped hole 1100, a length direction of the first strip-shaped hole 1100 is parallel to the second direction y, the first support member 11 is connected to the third support member 13 through a first connecting member passing through the first strip-shaped hole 1100, and the first connecting member is configured to be engaged with the first strip-shaped hole 1100 in a position-adjustable manner in the second direction y.

A length direction of the first strip-shaped hole 1100 is a direction in which a size of the first strip-shaped hole 1100 is maximum. Illustratively, the first strip-shaped hole 1100 is an elongated hole or a waist-shaped hole extending in the second direction y. The first strip-shaped hole 1100 passes through the first support body 110 in the third direction z.

The first connecting member is a connecting member capable of passing through the first strip-shaped hole 1100 and being in sliding fit with the first strip-shaped hole 1100. Illustratively, the first connecting member includes a bolt, the third support body 130 of the third support member 13 is provided with a threaded hole, the bolt passes through the first strip-shaped hole 1100 and is connected to the threaded hole, and a nut of the bolt may abut against the surface of the first support body 110 facing away from the third support body 130, such that a stable connection relationship is present between the first support body 110 and the third support body 130. When the position of the first support member 11 in the second direction y needs to be adjusted, the bolt is loosened and the first support body 110 slides relative to the first connecting member, and then the bolt is tightened.

In the above solutions, by providing the first strip-shaped hole 1100 extending in the second direction y on the first support body 110, and allowing the first connecting member to pass through the first strip-shaped hole 1100 to connect the first support body 110 and the third support member 13, the first support member 11 is movable relative to the third support member 13 in the second direction y through cooperation between the first connecting member and the first strip-shaped hole 1100, thereby adjusting a position relationship between the first support member 11 and the second support member 12 in the second direction y, and thus adjusting the size of the constraint space 10a in the second direction y to adapt to batteries 2000 of different specifications.

According to some embodiments of the present application, the flipping member 10 further includes a limiting member 14. The limiting member 14 is connected to the second support member 12, and in the third direction z, the limiting member 14 and the third support member 13 are spaced apart from each other to limit displacement of the battery 2000 in the third direction z.

In the third direction z, the limiting member 14 and the third support member 13 are spaced apart from each other. In some embodiments, the first support member 11, the second support member 12, the third support member 13, and the limiting member 14 jointly enclose a constraint space 10a. The constraint space 10a is provided with an inlet 10b and an outlet 10c arranged opposite to each other in the first direction x. During the rotation of the flipping member 10, the first support member 11 and the second support member 12 provide a constraint for the battery 2000 in the second direction y, and the third support member 13 and the limiting member 14 can provide a constraint for the battery 2000 in the third direction z.

In some embodiments, the limiting member 14 may be connected to the second support member 12. In some other embodiments, the limiting member 14 may be connected to the first support member 11. In some other embodiments, the limiting member 14 may further be connected to the second support member 12 and the first support member 11, such that the first support member 11, the second support member 12, the third support member 13, and the limiting member 14 jointly enclose a constraint space 10a.

In some embodiments, when the battery 2000 is located in the constraint space 10a, a portion of the battery 2000 facing away from the third support member 13 may not be in contact with the limiting member 14, and the function of the limiting member 14 may include that when the battery 2000 is subjected to an excessive centrifugal force due to the rotation of the flipping member 10, the limiting member 14 limits the displacement of the battery 2000. In some embodiments, the centrifugal force received by the battery 2000 due to the rotation of the flipping member 10 may be small, so that the limiting member 14 is not in contact with the battery 2000.

In the above solutions, by setting the limiting member 14 to cooperate with the third support member 13, the battery 2000 can be constrained in the third direction z, such that the risk of the battery 2000 disengaging from the third direction z during the rotation of the flipping member 10 is reduced. This ensures a fast cycle rate of flipping the battery 2000 and thus improves the manufacturing efficiency of the battery 2000.

According to some embodiments of the present application, a distance between the limiting member 14 and the third support member 13 is adjustable in the third direction z.

In some embodiments, the limiting member 14 can be adjustable in position relative to the second support member 12 in the third direction z to adjust the distance between the limiting member 14 and the third support member 13 in the third direction z.

Illustratively, taking "the limiting member 14 can be adjustable in position relative to the second support member 12 in the third direction z" as an example, a position adjustment structure may be arranged between the limiting member 14 and the second support member 12. For example, the limiting member 14 is provided with a strip-shaped hole extending in the third direction z, and the connection between the limiting member 14 and the second support member 12 is achieved by the connecting member passing through the strip-shaped hole, while the connecting member is slidable relative to the strip-shaped hole. For another example, the second support member 12 is provided with a cylinder, a telescopic rod of the cylinder moves in the third direction z, the limiting member 14 is arranged on the telescopic rod, and the position of the limiting member 14 is adjusted in the third direction z under the driving of the cylinder.

In the above solutions, by setting the positions of the limiting member 14 and the third support member 13 to be adjustable in the third direction z, the size of the constraint space 10a in the third direction z can be adjusted, so as to adapt to batteries 2000 of different specifications and improve the compatibility of the flipping apparatus 100.

According to some embodiments of the present application, referring to FIG. 11, FIG. 11 is an enlarged view of part A in FIG. 8. The limiting member 14 includes a first portion 140 and a second portion 141 connected to each other. The first portion 140 and the third support member 13 are spaced apart from each other in the third direction z, the second portion 141 is provided with a second strip-shaped hole 142, a length direction of the second strip-shaped hole 142 is parallel to the third direction z, the limiting member 14 is connected to the second support member 12 through a second connecting member passing through the second strip-shaped hole 142, and the second connecting member is configured to be engaged with the second strip-shaped hole 142 in a position-adjustable manner in the third direction z.

In some embodiments, the first portion 140 may be plate-shaped, and the first portion 140 is arranged opposite to and spaced apart from the third support member 13 in the third direction z. In some other embodiments, the surface of the first portion 140 facing the third support member 13 may be provided with a roller that may be configured to be in rolling contact with the battery 2000.

In some embodiments, the second portion 141 may be a support, two second portions 141 may be provided, and the two second portions 141 are respectively arranged at two opposite ends of the first portion 140 in the first direction x. Referring to FIG. 10, the second portion 141 is provided with a second strip-shaped hole 142. The second strip-shaped hole 142 passes through a wall part of the second portion 141 in the first direction x, and the second strip-shaped hole 142 may be an elongated hole or a waist-shaped hole extending in the third direction z.

The second connecting member is a connecting member that can pass through the second strip-shaped hole 142 and be in sliding fit with the second strip-shaped hole 142. Illustratively, the second connecting member includes a bolt, the second support body 120 of the second support member 12 is provided with a threaded hole, the bolt passes through the second strip-shaped hole 142 and is connected to the threaded hole, and a nut of the bolt may abut against the surface of the second portion 141 facing away from the second support body 120, such that a stable connection relationship is present between the limiting member 14 and the second support body 120. When the position of the limiting member 14 in the third direction z needs to be adjusted, the bolt is loosened and the limiting member 14 slides relative to the second connecting member, and then the bolt is tightened.

In the above solutions, the limiting member 14 has a simple structure and is easy to manufacture. By providing the second strip-shaped hole 142 extending in the third direction z on the second portion 141, and allowing the second connecting member to pass through the second strip-shaped hole 142 to connect the limiting member 14 and the second support member 12, the limiting member 14 is movable relative to the second support member 12 in the third direction z through cooperation between the second connecting member and the second strip-shaped hole 142, thereby adjusting a position relationship between the first portion 140 and the third support member 13 in the third direction z, and thus adjusting the size of the constraint space 10a in the third direction z to adapt to batteries 2000 of different specifications.

According to some embodiments of the present application, the flipping apparatus 100 further includes a rotating shaft. Each of the flipping members 10 is connected to the rotating shaft, and the rotating mechanism 20 drives all of the flipping members 10 to rotate by driving the rotating shaft to rotate.

In some embodiments, all of the flipping members 10 are fixed to the same rotating shaft, and the rotating mechanism 20 can simultaneously drive all of the flipping members 10 to rotate by driving the rotating shaft, such that each flipping member 10 can be cyclically switched between the first position and the second position.

In some embodiments, the connection relationship between the flipping member 10 and the rotating shaft is variable. For example, the connection relationship between the flipping member 10 and the rotating shaft includes, but is not limited to, welding, riveting, threaded structural member connection, or other connection relationships.

In the above solutions, by arranging the rotating shaft, the rotating mechanism 20 can synchronously drive all of the flipping members 10 to rotate, such that the plurality of flipping members 10 can continuously flip the battery, thereby effectively reducing the cycle time of flipping the battery, and further improving the manufacturing efficiency of the battery.

According to some embodiments of the present application, referring to FIG. 8, a connecting part 123 is arranged on the side of the second support member 12 facing away from the first support member 11, and the connecting part 123 is connected to the rotating shaft.

The connecting part 123 is a structural member arranged on the side of the second support member 12 facing away from the first support member 11, and the flipping member 10 is connected to the rotating shaft through the connecting part 123. In some embodiments, the connecting part 123 protrudes from an outer side surface of the second support member 12 to be connected to an outer periphery of the rotating shaft.

In some embodiments, the connection relationship between the connecting part 123 and the second support member 12 includes, but is not limited to, welding, riveting, threaded structural member connection, or the connecting part 123 and the second support member 12 being integrally formed.

The connection relationship between the connecting part 123 and the rotating shaft is variable. For example, the connection relationship between the connecting part and the rotating shaft includes, but is not limited to, welding, riveting, threaded structural member connection, or other connection relationships.

In some embodiments, the second support body 120 is provided with a connecting part 123, the connecting part 123 is located on the surface of the second support body 120 facing away from the first support member 11, and the connecting part 123 may be connected to the rotating mechanism 20. For example, the connecting part 123 is connected to the rotating shaft 31, and the rotating mechanism 20 drives the rotating shaft 31 to rotate to drive the flipping member 10 to rotate.

According to some embodiments of the present application, referring to FIG. 1, the flipping apparatus 100 further includes a frame 30, and the flipping member 10 is rotatably arranged on the frame 30 through a rotating shaft 31. The rotating mechanism 20 includes a driving member 21 and a transmission member 22, and the driving member 21 is connected to the rotating shaft 31 through the transmission member 22 to drive the flipping member 10 to rotate.

The frame 30 plays a supporting role, the frame 30 is rotatably provided with a rotating shaft 31, and the flipping member 10 is fixed to the rotating shaft 31. An axis of the rotating shaft 31 is the rotation axis s of the flipping member 10.

The rotating mechanism 20 includes a driving member 21 and a transmission member 22, the driving member 21 may be arranged on the frame 30, the driving member 21 is connected to the rotating shaft 31 through the transmission member 22, and the power output by the driving member 21 can cause the rotating shaft 31 to rotate, thereby causing the flipping member 10 to rotate. In some embodiments, the driving member 21 may include a servo motor, and the transmission member 22 may include a synchronization belt transmission structure.

In the above solutions, by arranging the frame 30, the flipping member 10 is rotatable around the rotation axis s under the action of the driving member 21 and the transmission member 22, so as to be switched from the first position to the second position, such that the battery 2000 corresponding to the first position can enter the constraint space 10a, and be switched to the second posture along with the rotation of the flipping member 10, and finally leaves the constraint space 10a from the position corresponding to the second position to enter the next processing procedure. This achieves the rapid flipping of the battery 2000, and further improves the manufacturing efficiency of the battery 2000.

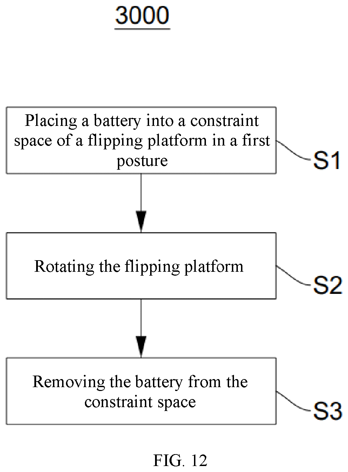

According to some embodiments of the present application, a method for flipping a battery is provided. Referring to FIG. 12, FIG. 12 is a flowchart block diagram of a method for flipping a battery according to some embodiments of the present application.

The method 3000 for flipping a battery is applied to the flipping apparatus 100 described above, and the method includes the following steps:
S1, placing the battery 2000 into the constraint space 10a of the flipping member 10 in the first posture;
S2, rotating the flipping member 10 such that the flipping member 10 is switched from the first position to the second position, so as to allow the battery 2000 to be flipped to the second posture; and
S3, removing the battery 2000 from the constraint space 10a.

In some embodiments, the flipping apparatus 100 provided above may be used to perform the method 3000 for flipping a battery, such that the battery 2000 can be quickly flipped from the first posture to the second posture, for example, from an upright posture to a lying-flat posture.

In some embodiments, in step S1, the battery 2000 may be placed into the constraint space 10a of the flipping member 10 through a pushing mechanism. In step S3, the battery 2000 may be pushed out of the constraint space 10a by another pushing mechanism.

In the above solutions, the method 3000 for flipping a battery is performed by using the flipping apparatus 100, such that the battery 2000 is switched from the first posture to the second posture, which can effectively reduce the cycle time of flipping the battery 2000. Therefore, the battery 2000 has high flipping efficiency, thereby improving the manufacturing efficiency of the battery 2000. Meanwhile, in the process of flipping the battery 2000, the posture of the battery 2000 is switched as the position of the flipping member 10 is switched, and the battery 2000 is constrained in the constraint space, so the risk of the battery 2000 slipping and being thrown off due to inertia is low, the flipping quality is high, and the manufacturing efficiency of the battery is high.

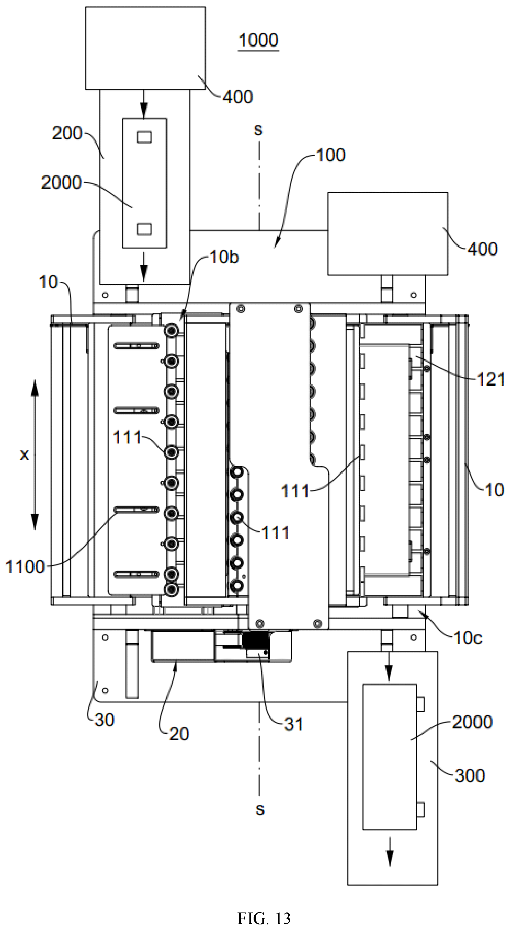

According to some embodiments of the present application, referring to FIG. 13, FIG. 13 is a schematic diagram of a device 1000 for manufacturing a battery according to some embodiments of the present application.

The device 1000 for manufacturing a battery includes a feeding conveyor line 200, a discharging conveyor line 300, and the flipping apparatus 100 described above. When the flipping member 10 is at the first position, the feeding conveyor line 200 provides the battery 2000 in the first posture to the flipping member 10; and when the flipping member 10 is at the second position, the discharging conveyor line 300 receives the battery 2000 that leaves the flipping member 10 and is in the second posture.

In some embodiments, the feeding conveyor line 200 may be an upstream mechanism of the flipping apparatus 100, and the feeding conveyor line 200 includes, but is not limited to, a drum conveyor line or a belt conveyor line. The discharging conveyor line 300 is a downstream mechanism of the flipping apparatus 100, and the discharging conveyor line 300 includes, but is not limited to, a drum conveyor line or a belt conveyor line. Illustratively, the battery 2000 is conveyed to the flipping apparatus 100 through the feeding conveyor line 200 in the first posture, and after the battery 2000 is flipped by the flipping apparatus 100, the battery is received by the discharging conveyor line 300 in the second posture and transported to the next processing procedure.

That "when the flipping member 10 is at the first position, the feeding conveyor line 200 provides the battery 2000 in the first posture to the flipping member 10" can be understood as that the feeding conveyor line 200 is arranged corresponding to the first position, such that the battery 2000 in the first posture on the feeding conveyor line 200 can enter the constraint space 10a.

That "when the flipping member 10 is at the second position, the discharging conveyor line 300 receives the battery 2000 that leaves the flipping member 10 and is in the second posture" can be understood as that the discharging conveyor line 300 is arranged corresponding to the second position, such that the battery 2000 in the second posture can leave the constraint space 10a and be received by the discharging conveyor line 300 for transportation to the next processing procedure.

In some embodiments, the device 1000 for manufacturing a battery may include a plurality of flipping apparatuses 100, and the battery 2000 is flipped by the plurality of flipping apparatuses 100 to adapt to different processing procedures of the battery 2000.

In the above solutions, by means of the flipping apparatus 100 according to the first aspect, in cooperation with the feeding conveyor line 200 arranged corresponding to the first position and the discharging conveyor line 300 arranged corresponding to the second position, the battery 2000 can quickly enter the constraint space 10a at the portion corresponding to the first position, and is switched to the second position along with the rotation of the flipping member 10, and the battery 2000 can be quickly received by the discharging conveyor line 300 corresponding to the second position to be conveyed to the next processing procedure. This achieves the rapid flipping of the battery 2000, and further improves the manufacturing efficiency of the battery 2000.

According to some embodiments of the present application, the device 1000 for manufacturing a battery further includes a pushing mechanism 400. The pushing mechanism 400 is configured to push the battery 2000 into or out of the constraint space 10a.

In some embodiments, the pushing mechanism 400 is a mechanism that can provide a pushing force to the battery 2000. Illustratively, the pushing mechanism 400 includes, but is not limited to, a mechanical arm, a linear pushing motor, a jacking cylinder, and other mechanisms that can output a pushing force.

In some embodiments, the feeding conveyor line 200 is correspondingly provided with a pushing mechanism 400, and the pushing mechanism 400 can push the battery 2000 located on the feeding conveyor line 200 into the constraint space 10a. In some embodiments, the discharging conveyor line 300 is correspondingly provided with a pushing mechanism 400, and the pushing mechanism 400 can push the battery 2000 located in the constraint space 10a out of the constraint space 10a and onto the discharging conveyor line 300.

Illustratively, referring to FIG. 13, the inlet 10b and the outlet 10c of the constraint space 10a are arranged opposite to each other in the first direction x, and the feeding conveyor line 200 is arranged corresponding to the inlet 10b. In FIG. 12, the feeding conveyor line 200 is located above the inlet. The discharging conveyor line 300 is arranged corresponding to the outlet 10c. In FIG. 12, the discharging conveyor line 300 is located below the outlet. The pushing mechanism for pushing the battery 2000 into the constraint space 10a is located above, and may output a pushing force directed from the inlet 10b to the outlet 10c, such that the battery 2000 enters the constraint space 10a. The pushing mechanism 400 for pushing the battery 2000 out of the constraint space 10a and onto the discharging conveyor line 300 may also be located above, and may push from the inlet 10b to output a pushing force directed from the inlet 10b to the outlet 10c, such that the battery 2000 disengages from the outlet 10c and is located on the discharging conveyor line 300.

In the above solutions, by arranging the pushing mechanism 400, the battery 2000 can be pushed efficiently, such that the battery 2000 can quickly enter or leave the constraint space 10a, thereby reducing the cycle time of flipping the battery 2000. Therefore, the battery 2000 can have high manufacturing efficiency.

According to some embodiments of the present application, a flipping apparatus 100 is provided. The flipping apparatus 100 is configured to flip a battery 2000, and is configured to flip the battery 2000 from an upright posture to a lying-flat posture or from the lying-flat posture to the upright posture.

The flipping apparatus 100 includes flipping members 10, a rotating mechanism 20, and a frame 30. The plurality of flipping members 10 are rotatably arranged on the frame 30 through a rotating shaft 31. The rotating mechanism 20 includes a servo motor and a synchronization belt transmission structure. The servo motor drives the rotating shaft 31 to rotate through the synchronization belt transmission structure, and the plurality of flipping members 10 rotate around the rotating shaft 31.

The flipping member 10 includes a first support member 11, a second support member 12, a third support member 13, and a limiting member 14. The first support member 11 and the second support member 12 are spaced apart from each other in the second direction y, and the third support member 13 is located between the first support member 11 and the second support member 12 and connects the first support member 11 and the second support member 12. The third support member 13 and the limiting member 14 are spaced apart from each other in the third direction z, and the limiting member 14 is arranged at the end portion of the second support member 12 facing away from the third support member 13 in the third direction z. The first support member 11, the second support member 12, the third support member 13, and the limiting member 14 jointly enclose a constraint space 10a, and the constraint space 10a is in a through shape in the first direction x, such that the constraint space 10a is provided with an inlet 10b and an outlet 10c opposite to each other in the first direction x. The constraint space 10a is configured to accommodate and constrain the battery 2000, and the battery 2000 can enter the constraint space 10a through the inlet 10b and leave the constraint space 10a through the outlet 10c. In some embodiments, the distance between the first support member 11 and the second support member 12 may be adjusted to adjust the size of the constraint space 10a in the second direction y, thereby adapting to batteries 2000 of different specifications. In some embodiments, the distance between the limiting member 14 and the third support member 13 may be adjusted to adjust the size of the constraint space 10a in the third direction z, thereby adapting to batteries 2000 of different specifications.

The flipping member 10 is configured to rotate by 90° under the driving of the rotating mechanism 20 to be switched from the first position to the second position. When the flipping member 10 is at the first position, the battery 2000 enters the channel in the first posture, and when the flipping member 10 is at the second position, the battery 2000 is flipped from the first posture to the second posture and leaves the constraint space 10a in the second posture. The first posture of the battery 2000 may be a posture when the battery 2000 is upright, and the second posture of the battery 2000 may be a posture when the battery 2000 is lying flat.

When the flipping apparatus 100 is applied to the device 1000 for manufacturing a battery, the feeding conveyor line 200 of the battery 2000 is arranged corresponding to the first position, such that the battery 2000 in the first posture on the feeding conveyor line 200 can enter the constraint space 10a. The discharging conveyor line 300 of the battery 2000 is arranged corresponding to the second position, such that the battery 2000 in the second posture can leave the constraint space 10a and be received by the discharging conveyor line 300 for transportation to the next processing procedure. In some embodiments, the feeding conveyor line 200 is correspondingly provided with a pushing mechanism 400, and the pushing mechanism 400 can push the battery 2000 located on the feeding conveyor line 200 into the constraint space 10a. In some embodiments, the discharging conveyor line 300 is correspondingly provided with a pushing mechanism 400, and the pushing mechanism 400 can push the battery 2000 located in the constraint space 10a out of the constraint space 10a and onto the discharging conveyor line 300.

The process of flipping the battery 2000 by the flipping apparatus 100 can be decomposed into three steps: the battery 2000 entering the constraint space 10a of the flipping member 10, rotating the flipping member 10, and the battery 2000 leaving the constraint space 10a. Therefore, the battery 2000 is flipped by the flipping apparatus 100, such that the battery 2000 is switched from the first posture to the second posture, which can effectively reduce the cycle time of flipping the battery 2000. Therefore, the battery 2000 has high flipping efficiency, thereby improving the manufacturing efficiency of the battery 2000. Meanwhile, in the process of flipping the battery 2000, the posture of the battery 2000 is switched as the position of the flipping member 10 is switched, and the battery 2000 is constrained in the constraint space 10a, so the risk of the battery 2000 slipping and being thrown off due to inertia is low, the flipping quality is high, and the manufacturing efficiency of the battery 2000 is high.

The above are only preferred embodiments of the present application and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A flipping apparatus, comprising:
a plurality of flipping members, each of the flipping members being provided with a constraint space for accommodating a battery to constrain a posture of the battery; and
a rotating mechanism, connected to each of the flipping members and configured to drive each of the flipping members to rotate around a rotation axis;
wherein each of the flipping members is configured to be cyclically switched between a first position and a second position under the driving of the rotating mechanism, when the flipping member is at the first position, the battery enters the constraint space in a first posture, and when the flipping member is at the second position, the battery is flipped from the first posture to a second posture and leaves the constraint space in the second posture.

2. The flipping apparatus according to claim 1, wherein
all of the flipping members are evenly spaced apart from each other around the rotation axis.

3. The flipping apparatus according to claim 1 or 2, wherein
the flipping member is configured to rotate by 90° under the driving of the rotating mechanism to be switched from the first position to the second position.

4. The flipping apparatus according to claim 3, wherein
four flipping members are provided, and the four flipping members are evenly spaced apart from each other around the rotation axis.

5. The flipping apparatus according to any one of claims 1 to 4, wherein
the constraint space comprises an inlet and an outlet, the inlet being configured to allow the battery to enter the constraint space, and the outlet being configured to allow the battery to leave the constraint space.

6. The flipping apparatus according to claim 5, wherein
the inlet and the outlet are opposite to each other in a first direction.

7. The flipping apparatus according to claim 6, wherein
The rotation axis is parallel to the first direction.

8. The flipping apparatus according to claim 6 or 7, wherein
the flipping member comprises a first support member and a second support member, wherein the first support member and the second support member are arranged opposite to each other in a second direction, the first support member and the second support member are configured to constrain the battery in the second direction, and the first direction and the second direction are perpendicular to each other.

9. The flipping apparatus according to claim 8, wherein
the first support member comprises a first support body and a first conveying part, wherein the first conveying part is arranged on the first support body, and the first conveying part is configured to guide the battery to move in the first direction.

10. The flipping apparatus according to claim 9, wherein
the first conveying part comprises a plurality of first rolling parts, wherein the plurality of first rolling parts are rollably arranged on the first support body and are configured to be in rolling contact with a surface of the battery facing away from the second support member.

11. The flipping apparatus according to any one of claims 8 to 10, wherein
the second support member comprises a second support body and a second conveying part, wherein the second conveying part is arranged on the second support body, and the second conveying part is configured to guide the battery to move in the first direction.

12. The flipping apparatus according to claim 11, wherein
the second conveying part comprises a plurality of second rolling parts, wherein the plurality of second rolling parts are rollably arranged on the second support body and are configured to be in rolling contact with a surface of the battery facing away from the first support member.

13. The flipping apparatus according to any one of claims 8 to 12, wherein
the flipping member further comprises a third support member, wherein the third support member is located between the first support member and the second support member, the third support member connects the first support member and the second support member, the third support member is configured to constrain the battery in a third direction, and every two of the first direction, the second direction, and the third direction are perpendicular to each other.

14. The flipping apparatus according to claim 13, wherein
the third support member comprises a third support body and a third conveying part, wherein the third conveying part is arranged on the third support body, and the third conveying part is configured to guide the battery to move in the first direction.

15. The flipping apparatus according to claim 14, wherein
the third conveying part comprises a plurality of third rolling parts, wherein the plurality of third rolling parts are rollably arranged on the third support body and are configured to be in rolling contact with a surface of the battery in the third direction.

16. The flipping apparatus according to claim 14 or 15, wherein a distance between the first support member and the second support member is adjustable in the second direction.

17. The flipping apparatus according to claim 16, wherein
the first support member comprises a first support body, wherein the first support body is provided with a first strip-shaped hole, a length direction of the first strip-shaped hole is parallel to the second direction, the first support member is connected to the third support member through a first connecting member passing through the first strip-shaped hole, and the first connecting member is configured to engage with the first strip-shaped hole in a position-adjustable manner in the second direction.

18. The flipping apparatus according to any one of claims 13 to 17, wherein
the flipping member further comprises a limiting member, wherein the limiting member is connected to the second support member, and in the third direction, the limiting member and the third support member are spaced apart from each other to limit displacement of the battery in the third direction.

19. The flipping apparatus according to claim 18, wherein
a distance between the limiting member and the third support member is adjustable in the third direction.

20. The flipping apparatus according to claim 19, wherein
the limiting member comprises a first portion and a second portion connected to each other, wherein the first portion and the third support member are spaced apart from each other in the third direction, the second portion is provided with a second strip-shaped hole, a length direction of the second strip-shaped hole is parallel to the third direction, the limiting member is connected to the second support member through a second connecting member passing through the second strip-shaped hole, and the second connecting member is configured to engage with the second strip-shaped hole in a position-adjustable manner in the third direction.

21. The flipping apparatus according to any one of claims 8 to 20, wherein
the flipping apparatus further comprises a rotating shaft, wherein each of the flipping members is connected to the rotating shaft, and the rotating mechanism drives all of the flipping members to rotate by driving the rotating shaft to rotate.

22. The flipping apparatus according to claim 21, wherein
a connecting part is arranged on a side of the second support member facing away from the first support member, and the connecting part is connected to the rotating shaft.

23. The flipping apparatus according to any one of claims 1 to 22, wherein
the flipping apparatus further comprises a frame, and the flipping member is rotatably arranged on the frame through the rotating shaft;
the rotating mechanism comprises a driving member and a transmission member, and the driving member is connected to the rotating shaft through the transmission member to drive the flipping member to rotate.

24. A method for flipping a battery, applied to the flipping apparatus according to any one of claims 1 to 23, comprising the following steps:
placing the battery into the constraint space of the flipping member in the first posture;
rotating the flipping member such that the flipping member is switched from the first position to the second position, so as to allow the battery to be flipped to the second posture; and
removing the battery from the constraint space.

25. A device for manufacturing a battery, comprising a feeding conveyor line, a discharging conveyor line, and the flipping apparatus according to any one of claims 1 to 23, wherein
when the flipping member is at the first position, the feeding conveyor line provides the battery in the first posture to the flipping member; and when the flipping member is at the second position, the discharging conveyor line receives the battery that leaves the flipping member and is in the second posture.

26. The device for manufacturing a battery according to claim 25, wherein
the device for manufacturing a battery further comprises a pushing mechanism, the pushing mechanism being configured to push the battery into or out of the constraint space.
